# EUROPÄISCHE PATENTSCHRIFT

(11) **EP 4 461 984 B1**
(45) Veröffentlichungstag und Bekanntmachung des Hinweises auf die Patenterteilung: **01.07.2026**
(21) Anmeldenummer: 24174204.8
(22) Anmeldetag: 03.05.2024
(51) Int. Cl.: F16D 11/10, F16D 27/108, F16D 27/118, F16D 27/14

(54) **ELEKTROMAGNETISCHE KUPPLUNG MIT SCHALTMUFFE**
ELECTROMAGNETIC CLUTCH WITH SHIFT SLEEVE
EMBRAYAGE ÉLECTROMAGNÉTIQUE AVEC MANCHON DE COMMANDE

(30) Priorität: 09.05.2023 DE 102023112192
(43) Veröffentlichungstag der Anmeldung: 13.11.2024
(73) Patentinhaber: HOERBIGER Antriebstechnik Holding GmbH, 86956 Schongau (DE)
(72) Erfinder: BINDER, Jürgen, 86956 Schongau (DE); ECHTLER, Peter, 86956 Schongau (DE); DEMPFLE, Andreas, 86956 Schongau (DE); FÜRGUTH, Werner, 86956 Schongau (DE); VOELK, Wolfgang, 86956 Schongau (DE); BUTORIN, Oleg, 86956 Schongau (DE); KUCHAREK, Sebastian, 86956 Schongau (DE); SEDLMAIR, Martin, 86956 Schongau (DE)
(74) Vertreter: Prinz & Partner mbB

(56) Entgegenhaltungen:
- GB-A- 883 608
- US-A- 4 744 449
- US-A1- 2009 173 590
- US-B2- 11 460 078

## Beschreibung

Die Erfindung betrifft eine elektromagnetische Kupplung und ein Verfahren zum Schließen und Öffnen einer elektromagnetischen Kupplung.

Soll temporär Drehmoment von einer Welle auf eine andere, koaxial dazu ausgerichtete Welle übertragen werden, ohne dass diese beiden Wellen dauerhaft verbunden werden, so kommen typischerweise Kupplungen zum Einsatz. Hierbei wird zwischen reibschlüssigen und formschlüssigen Kupplungen unterschieden. Die vorliegende Erfindung beschränkt sich dabei auf formschlüssige Kupplungen.

Für formschlüssige Kupplungen werden häufig verschiebliche Schaltmuffen eingesetzt. Diese weisen eine oder auch mehrere verschiedene Verzahnungen auf, welche in Gegenverzahnungen greifen, sodass ein Formschluss entsteht, über den Drehmoment von einer auf eine andere Welle übertragen werden kann.

Aus dem Stand der Technik sind elektromagnetische Kupplungen bekannt, bei denen die Verstellung der verschieblichen Schaltmuffe über eine Spule erfolgt, die eine magnetische Kraft auf die Schaltmuffe ausübt. Im Zusammenhang der nachfolgend beschriebenen erfindungsgemäßen elektromagnetischen Kupplung wird der Anker, der auch die Schaltmuffe bildet, nachfolgend ausschließlich als Schaltmuffe bezeichnet. Die erreichbaren, auf die Schaltmuffe wirkenden Schaltkräfte bei einer magnetischen Kupplung sind maßgeblich von den Luftspalten zwischen dem Stator und Anker (Schaltmuffe) abhängig. Sowohl die radialen wie auch die axialen Luftspalte beeinflussen die Höhe der Schaltkraft. Da der axiale Luftspalt durch den notwendigen Hub (Schaltweg) vorgegeben ist, kann die Kraft im Wesentlichen noch durch die Größe des radialen Luftspalts beeinflusst werden. Die Schaltmuffe wird entlang einer Welle geführt, wobei die Schaltmuffe eine Innenverzahnung aufweist, die in eine auf der Welle vorgesehenen Außenverzahnung eingreift, sodass die Schaltmuffe entsprechend den obigen Erläuterungen entlang der Welle verstellbar ist und verdrehfest mit dieser gekoppelt ist.

Aufgrund des Verzahnungsspiels zwischen Schaltmuffe und Welle (Nabe) kann sich auch ein ungleichmäßiger radialer Spalt zwischen Stator und Schiebemuffe über den Umfang betrachtet einstellen. Dies ist insbesondere dann der Fall, wenn die Bauteile nicht rotieren und sich die Schiebmuffe aufgrund der Gewichtskraft auf der Wellenverzahnung abstützt. Unter Rotation und den dann wirksamen Fliehkräften richten sich die Bauteile an den Zahnflanken aus und es entsteht ein gleichmäßiger Luftspalt entlang des Umfangs zwischen Stator und Schaltmuffe.

Ein ungleichmäßiger radialer Luftspalt ist insofern problematisch, da sich durch den Magnetfluss durch die Bauteile auch radiale Kräfte einstellen, welche aufgrund der Reibungskräfte die Bewegung der Schaltmuffe behindern.

Dies hat zur Folge, dass die Schaltkraft, die von der Spule auf die Schaltmuffe übertragen wird, nicht genau eingestellt werden kann. Zudem ist es auch möglich, dass die Schaltkraft, die entlang des Umfangs der Schaltmuffe wirkt, nicht gleichmäßig ist.

Weiter kann es aufgrund von Toleranzen auch zu Abweichungen beim Einbau der elektromagnetischen Kupplung auf der Welle kommen, welche die Positionierung der Schaltmuffe relativ zur Spule beeinflussen, sodass der radiale Spalt variieren kann.

Zusammenfassend ist die wirksame axiale Schaltkraft, welche auf die Schiebemuffe wirkt, auch von den radialen Luftspalten abhängig. Durch einen vergrößerten Luftspalt sinkt die Schaltkraft, wobei diese auch durch einen variierenden und ungleichmäßigen radialen Spalt (aufgrund der Querkräfte) vermindert wird. Vor diesem Hintergrund ist es die Aufgabe der Erfindung, eine elektromagnetische Kupplung bereitzustellen, bei der eine möglichst konstante und reproduzierbare Gesamtschaltkraft auf die Schaltmuffe aufgebracht werden kann, die gleichmäßig über den Umfang betrachtet in axialer Schaltrichtung wirkt.

Aus der US 11 460 078 B2 ist eine modulare Kupplungsbaugruppe mit einem Gehäuse bekannt, das für eine Kraftübertragung eine innere und eine obere Kupplung umfasst.

In der GB 883 608 A ist eine Schraubenreibungskupplung gezeigt, die durch eine elektromagnetische Scheibenkupplung betätigt wird. Dafür ist ein Anker in der Scheibenkupplung vorgesehen, der eine Scheibe gegen eine Antriebsscheibe drückt, wenn eine Spule erregt wird, so dass sich die Scheibe dreht und eine Feder zusammenzieht, was zu einem Einrücken der Schraubenreibungskupplung führt.

Die US 4 744 449 A und die US 2009 / 173 590 A offenbaren ebenfalls elektromagnetische Kupplungsanordnungen. Die gestellte Aufgabe wird erfindungsgemäß durch eine elektromagnetische Kupplung gelöst, mit einer Schaltmuffe, die drehfest auf einer ersten Welle angeordnet ist und linear entlang der ersten Welle zwischen einem Ein- und Auskupplungszustand verstellbar ist, einem Kupplungskörper, der koaxial zur ersten Welle ausgerichtet ist, wobei im Einkupplungszustand ein Formschluss zwischen der Schaltmuffe und dem Kupplungskörper und damit eine Drehverbindung zwischen der ersten Welle und dem Kupplungskörper vorliegt, und einem Stator, der eine Spule umfasst, die zur Verstellung eines Ankerrings linear entlang der ersten Welle dient, wobei der Ankerring separat von der ersten Welle und dem Kupplungskörper in einer Axialführung radial gelagert ist, wobei mit einer Verstellung des Ankerrings mittels der Spule auch eine Verstellung der Schaltmuffe einhergeht. Dabei ist der Formschluss zwischen der Schaltmuffe und dem Kupplungskörper im Einkupplungszustand durch eine Kupplungsverzahnung mit Hinterschnitten erfolgen, wobei die Hinterschnitte derart ausgebildet sind, dass eine Drehmomentbeaufschlagung der Kupplung ein zusätzliches Verschieben der Schaltmuffe hin zum Kupplungskörper zur Folge hat.

Der Grundgedanke der Erfindung ist es, einen gleichmäßigen und minimalen radialen Spalt zwischen dem Ankerring und dem Stator bzw. der Spule des Stators sicherzustellen, indem der Ankerring gelagert bzw. geführt wird.

Die Führung des Ankerrings erfolgt innerhalb des Stators und ist somit gentrennt von der Kupplung bzw. der rotierenden Welle. Dadurch kann der Ankerring präzise und mit einem geringen radialen Luftspalt innerhalb des Stators durch die Axialführung geführt werden. Da keine Relativdrehzahl zwischen Ankerring und Stator vorhanden ist, entsteht bei Berührung kein Verschleiß zwischen den Bauteilen. Der radiale Luftspalt zwischen Ankerring und Stator kann folglich auf ein Minimum reduziert werden.

Durch die zusätzliche Axialführung kann der Ankerring präziser relativ zur Spule ausgerichtet werden, als wenn eine Führung lediglich über die erste Welle, den Kupplungskörper oder die Schaltmuffe selbst erfolgt.

Der dabei entstehende definierte radiale Luftspalt um den Ankerring ermöglicht es, magnetische Kräfte konstant und gleichmäßig entlang des Umfangs des Ankerrings auf den Ankerring aufzubringen.

Da mit einer Verstellung des Ankerrings auch eine Verstellung der Schaltmuffe einhergeht, wirkt die Schaltkraft auch gleichmäßig entlang des Umfangs der Schaltmuffe.

Durch das zusätzliche Verschieben der Schaltmuffe hin zum Kupplungskörper durch die Hinterschnitte der Kupplungsverzahnung findet eine relative Bewegung zwischen der Schaltmuffe und dem Ankerring in axialer Richtung statt. Dies hat zur Folge, dass die erste und zweite axiale Anlagefläche keinen Kontakt zueinander aufweisen.

Durch die Trennung der Anlageflächen im Einkupplungszustand bei vorliegender Drehmomentbeaufschlagung und der weiteren axialen Bewegung der Schaltmuffe kann ein möglicher Verschleiß verringert oder verhindert werden.

Alternativ kann die Schaltmuffe auch den Ankerring bilden. Dementsprechend sind der Ankerring und die Schaltmuffe nicht als separate Teile ausgebildet, sondern einteilig.

Folglich kommt es im Einkupplungszustand und bei einer sich drehenden Schaltmuffe zu einer Relativbewegung zwischen der Axialführung und der als Ankerring ausgebildeten Schaltmuffe.

Dabei ist es denkbar, dass ähnlich den obigen Erläuterungen die Kontaktflächen zwischen der Axialführung und der der als Ankerring ausgebildeten Schaltmuffe mit einer Gleitschicht versehen werden und/oder gehärtet sind.

Alternativ ist es auch denkbar, dass die Axialführung selbst zusätzlich gelagert ist, sodass eine Drehbewegung der Schaltmuffe eine Mitnahme der Axialführung zur Folge hat.

Gemäß einem Aspekt der Erfindung können der Ankerring und die Schaltmuffe verschiedene, miteinander in Axialrichtung koppelbare Teile sein, wobei der Ankerring eine erste axiale Anlagefläche aufweist, die zumindest bei einer Verstellung des Ankerrings mittels der Spule mit einer zweiten an der Schaltmuffe vorgesehenen axialen Anlagefläche in Kontakt ist.

Da es sich bei dem Ankerring und der Schaltmuffe um verschiedene Teile handelt, können diese aus verschiedenen Materialien hergestellt werden und unterschiedlich bearbeitet bzw. behandelt werden. Dementsprechend kann der Ankerring bspw. aus einem Material hergestellt werden, welches vorteilhafte ferromagnetische Eigenschaften aufweist, während dies nicht zwangsläufig für die Schaltmuffe erfolgen muss.

Bei dieser mehrteiligen Variante ist der Ankerring separat von der Schaltmuffe in der Axialführung radial gelagert.

Darüber hinaus kann die Schaltmuffe bspw. wärmebehandelt werden, um die Materialeigenschaften zu beeinflussen, wie Schaltmuffe oder Bereiche der Schaltmuffe zu härten.

Durch die erste und zweite axiale Anlagefläche können die Schaltkräfte einfach und gleichmäßig bei einer Verstellung des Ankerrings mittels der Spule auf die Schaltmuffe übertragen werden.

Bevorzugt können die erste und/oder die zweite Anlagefläche mit einer Gleitschicht beschichtet und/oder gehärtet sein.

Dies erweist sich dann als besonders vorteilhaft, wenn eine Relativbewegung zwischen der Schaltmuffe und dem Ankerring vorliegt, durch welche es bei einer sich im Kontakt befindlichen ersten und zweiten Anlagefläche zur Reibung kommt und damit auch ein Verschleiß der Anlageflächen einhergehen kann.

Eine Gleitschicht auf zumindest einer der Anlageflächen erlaubt es, bei einer Relativdrehzahl zwischen der Schaltmuffe und dem Ankerring, Reibung zwischen der ersten und zweiten Anlage zu verringern. So fällt der Verschleiß der Anlageflächen geringer aus als wenn weder die erste noch die zweite axiale Anlagefläche mit einer Gleitschicht versehen wären.

Ist zumindest eine der Anlageflächen gehärtet, so ist hierdurch ebenfalls sichergestellt, dass der eventuell eintretende Verschleiß bei sich kontaktierenden Anlageflächen geringer ausfällt als bei unbehandelten Flächen.

Wird zumindest eine der beiden Anlageflächen sowohl gehärtet als auch mit einer Gleitschicht beschichtet, so kombinieren sich die obigen Vorteile, sodass bei sich kontaktierenden Anlageflächen und einer Relativbewegung dieser eine geringe Reibung und ein besonders geringer Verschleiß vorliegen.

Vorteilhafterweise kann der Ankerring ein L-förmiges, umlaufendes Profil mit einem von einem Kreiszylinder radial nach innen vorstehenden Flansch umfassen, der die erste axiale Anlagefläche aufweist.

Dies ist eine besonders einfache und robuste Ausgestaltung, um die erste Anlagefläche bereitzustellen. Die axial auf den Ankerring wirkende magnetische Kraft wird durch die stirnseitige Anlage der ersten Anlagefläche in axialer Bewegungsrichtung auch auf die Schaltmuffe übertragen. Hierdurch kann die Schaltkraft über eine große Fläche radial gleichmäßig von dem Ankerring auf die Schaltmuffe übertragen werden.

Vorteilhafterweise kann eine Verstellung des Ankerrings durch die Spule durch einen Anschlag begrenzt sein. Weiter kann bei einer Kontaktierung zwischen dem Ankerring und dem Anschlag bei bestromter Spule eine magnetische Haltekraft vorliegen, die auf den Ankerring wirkt.

Kontaktiert der Ankerring also den Anschlag, so resultiert dies in einer hohen magnetischen Haltekraft, die selbst vorliegt, wenn durch die Spule nur geringe Stromstärken fließen.

Diese hohe magnetische Haltekraft wird aufgrund der auf ein Minimum reduzierten Luftspalte in radialer wie auch axialer Richtung.

Hierdurch kann die Verlustleistung beim Halten des Ankerrings am Anschlag durch Senken der Stromstärke deutlich reduziert werden, ohne dass der Ankerring sich ungewollt vom Anschlag löst.

Weiter kann hierdurch auch sichergestellt werden, dass sich der Formschluss der Kupplungsverzahnung durch ein Verschieben der Schaltmuffe auflöst.

Darüber hinaus erlaubt der Anschlag eine definierte Lage des Ankerrings bei einer Verstellung der Schaltmuffe in den Einkupplungszustand und hält diesen für den Fall, dass der Ankerring und die Schaltmuffe separat voneinander ausgebildet sind und die Kupplungsverzahnung entsprechend den obigen Erläuterungen mit Hinterschnitten versehen ist, in Position.

Vorteilhafterweise kann der Stator zumindest ein Außengehäuse umfassen, das teilweise entlang der Spule verläuft, und das eine Führungsgeometrie zwischen dem Außengehäuse und dem Ankerring und/oder zwischen dem zusätzlichen Führungselement und dem Ankerring ausgebildet ist, die die Axialführung des Ankerrings entlang der Achse der ersten Welle übernimmt. Hierdurch kann ein definierter radialer Luftspalt zwischen dem Ankerring und dem Außengehäuse des Stators erreicht werden.

Bevorzugt kann die Führungsgeometrie zumindest einen Führungssteg aufweisen, der in eine Führungsnut ragt und ein Verdrehen des Ankerrings relativ zum Stator verhindert, sowie eine radiale Führungsfläche, die den Ankerring konzentrisch zum Stator führt.

Sind der Ankerring und die Schaltmuffe als verschiedene separate Teile ausgebildet, so kann das zusätzliche Führungselement eine Scheibe sein, welche einerseits mit dem Außengehäuse des Stators und andererseits mit dem Ankerring drehfest gekoppelt ist.

Das Führungselement in Form einer Scheibe ist dabei besonders platzsparend, einfach herzustellen und erlaubt es, auf einfache Weise den Ankerring konzentrisch zum Stator zu führen und zur ersten Welle auszurichten.

Darüber hinaus kann die bestromte Spule eine magnetische Kraft auf den Ankerring ausüben, die über den Ankerring auf die Schaltmuffe hin zum Auskupplungszustand oder hin zum Einkupplungszustand wirkt, wobei eine elastische Federeinheit vorgesehen ist, die eine Rückstellkraft auf die Schaltmuffe ausübt, welche in eine der magnetischen Kraft entgegengesetzte Richtung wirkt.

Je nach Anwendungsfall kann also individuell entschieden werden, ob die Kupplung bei nicht bestromter Spule geschlossen oder geöffnet sein soll.

Darüber hinaus wird durch die elastische Federeinheit sichergestellt, dass bei einer Auslenkung der Schaltmuffe in den Ein- oder Auskupplungszustand eine automatische Rückstellung der Schaltmuffe erfolgt, sobald der Betrag der Rückstellkraft der elastischen Federeinheit den Betrag der Schaltkraft der Spule übertrifft.

Bevorzugt kann die Rückstellkraft, die die elastische Federeinheit auf die Schaltmuffe ausübt, auch auf den Ankerring wirken. Dementsprechend geht mit einer Rückstellung der Schaltmuffe über die elastische Federeinheit auch eine Rückstellung des Ankerrings einher.

Die elastische Federeinheit kann innerhalb der Schaltmuffe angeordnet sein und sich in axialer Richtung direkt oder indirekt an der Schaltmuffe und an der ersten Welle abstützen. Die Anordnung der elastischen Federeinheit innerhalb der Schaltmuffe ist besonders platzsparend. Weiter kann die elastische Federeinheit durch die Anordnung innerhalb der Schaltmuffe durch die Schaltmuffe um die erste Welle geführt sein. Eine Abstützung der elastischen Federeinheit direkt oder indirekt an der Schaltmuffe und an der ersten Welle hat den Vorteil, dass die Federeinheit gleichmäßig in axialer Richtung die Rückstellkraft über Abstützen an der ersten Welle auf die Schaltmuffe ausüben kann.

Bevorzugt ist innerhalb der Schaltmuffe ein Stützring angeordnet, an dem sich die elastische Federeinheit in axialer Richtung abstützt.

Der Stützring für die elastische Federeinheit kann form-, stoff- oder reibschlüssig mit der Schaltmuffe verbunden sein.

Weiter kann der Stützring in Form eines Bajonettrings ausgebildet sein, der eine Bajonettverbindung mit der Schaltmuffe eingehen kann und an dem sich die elastische Federeinheit in axialer Richtung abstützt.

Entsprechend kann die elastische Federeinheit bei der Montage zunächst in die Schaltmuffe eingelegt werden und mittels des Bajonettrings zwischen der ersten Welle und dem Bajonettring selbst fixiert werden. Weiter erlaubt der Bajonettring eine einfache Montage innerhalb der Schaltmuffe.

Die Bajonettverbindung kann einerseits durch eine umlaufende Nut und eine erste Verzahnung, die jeweils auf der Innenseite der Schaltmuffe hin zur ersten Welle vorgesehen sind, gebildet sein und andererseits durch eine zweite an dem Bajonettring vorgesehene Verzahnung.

Somit wird zur Montage des Bajonettrings innerhalb der Schaltmuffe der Bajonettring zunächst derart ausgerichtet, dass die Verzahnungen von Bajonettring und Schaltmuffe keinerlei Überdeckung haben und der Bajonettring axial in die Schaltmuffe eingeschoben werden kann.

Befindet sich die zweite an dem Bajonettring vorgesehene Verzahnung in der umlaufenden Nut innerhalb der Schaltmuffe, so kann der Bajonettring relativ zur Schaltmuffe verdreht werden.

Dabei kann der Bajonettring derart verdreht werden, dass es zu einer zumindest teilweisen Überdeckung der ersten und zweiten Verzahnung kommt, wodurch der Bajonettring axial durch die Verzahnung innerhalb der Schaltmuffe fixiert ist, wobei das elastische Federeinheit bei dem eingelegten Bajonettring unter Vorspannung sein kann, sodass der Bajonettring von diesem gegen die Schaltmuffe beaufschlagt wird.

Vorteilhafterweise kann die elastische Federeinheit zumindest eine Wellenfeder umfassen. Eine Wellenfeder stellt dabei ein günstiges und einfaches Bauteil dar, welches sich besonders eignet, da die von der elastischen Federeinheit auf die Schaltmuffe wirkende Rückstellkraft über die Wellenfeder gleichmäßig entlang des Umfangs der Schaltmuffe wirken kann.

Es ist auch denkbar, dass die zumindest zwei Wellenfedern vorgesehen sind, die jeweils Nasen aufweisen, die in eine Aussparung eingreifen, sodass sich die zumindest zwei Wellenfedern nicht relativ zueinander verdrehen können. Durch die zumindest zwei Wellenfedern kann dabei der Federweg erhöht werden, was zur Folge hat, dass die axiale Relativbewegung der Schaltmuffe zur ersten Welle vergrößert werden kann.

Die eingangs genannte Aufgabe wird zudem gelöst durch ein Verfahren zum Schließen und Öffnen einer erfindungsgemäßen elektromagnetischen Kupplung, mit den folgenden Schritten:
a) Spannungsanlegen an die Spule und Erzeugen einer auf den Ankerring wirkenden magnetischen Kraft in eine erste Richtung;
b) dadurch Verschieben der Schaltmuffe aus der Ausgangsposition und hin zum Ein- oder Auskupplungszustand;
c) Aufheben oder Verringern der auf den Ankerring wirkenden magnetischen Kraft; und
d) Verschieben der Schaltmuffe entgegen der Richtung der magnetischen Kraft durch eine Rückstellkraft, die die elastische Federeinheit auf die Schaltmuffe ausübt.

Diese hieraus ergebenen Vorteile sind den obigen Erläuterungen zu entnehmen.

Die Erfindung wird nachfolgend anhand einer Ausführungsform beschrieben, die in den beigefügten Zeichnungen dargestellt ist. In diesen zeigen:
- Figur 1 eine Schnittdarstellung einer erfindungsgemäßen elektromagnetischen Kupplung mit einer Schaltmuffe im Auskopplungszustand;
- Figur 2 eine perspektivische Explosionsansicht eines Stators mit einem Ankerring der elektromagnetischen Kupplung von Figur 1;
- Figur 3 eine perspektivische Explosionsansicht der Schaltmuffe sowie eines Kupplungskörpers und einer ersten Welle der elektromagnetischen Kupplung von Figur 1;
- Figur 4 eine perspektivische Detailansicht der Schaltmuffe, des Kupplungskörpers und der ersten Welle im Schnitt;
- Figur 5a eine Frontansicht der Schaltmuffe, des Kupplungskörpers und der ersten Welle der erfindungsgemäßen elektromagnetischen Kupplung im Detail;
- Figur 5b eine weitere Frontansicht der Schaltmuffe, des Kupplungskörpers und der ersten Welle der erfindungsgemäßen elektromagnetischen Kupplung im Detail;
- Figur 6 eine Schnittdarstellung einer erfindungsgemäßen elektromagnetischen Kupplung mit einer Schaltmuffe im Auskopplungszustand gemäß einer zweiten Option;
- Figur 7 das Detail A der elektromagnetischen Kupplung von Figur 1;
- Figur 8 das Detail A der elektromagnetischen Kupplung von Figur 1 mit der Schaltmuffe im Einkupplungszustand;
- Figur 9 das Detail B der elektromagnetischen Kupplung von Figur 6; und
- Figur 10 das Detail B der elektromagnetischen Kupplung von Figur 6 mit der Schaltmuffe im Einkupplungszustand.

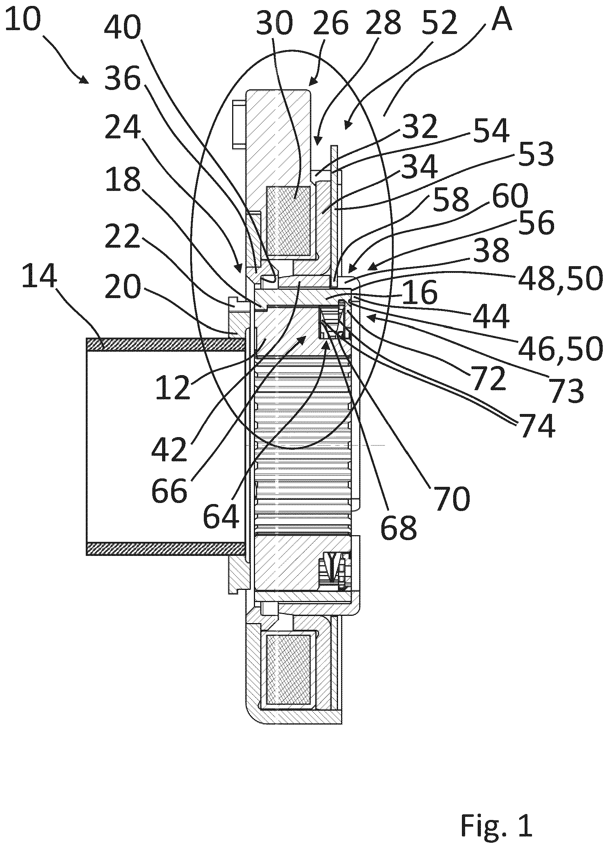

Figur 1 zeigt eine elektromagnetische Kupplung 10, die dazu dient, durch Öffnen und Schließen eine erste Welle 12 und eine koaxial zur ersten Welle 12 ausgerichtete zweite Welle 14 miteinander zu koppeln.

Die elektromagnetische Kupplung 10 umfasst eine Schaltmuffe 16, die radial innenseitig entlang des Umfangs erste Zähne 18 aufweist. Weiter ist die Schaltmuffe 16 drehfest auf der ersten Welle 12 angeordnet und linear entlang dieser zwischen einem Ein- und einem Auskupplungszustand verstellbar. Figur 1 zeigt die Schaltmuffe 16 im Auskupplungszustand.

Der zweiten Welle 14 ist ein Kupplungskörper 20 zugeordnet, der drehfest mit der Welle 14 gekoppelt ist.

Der Kupplungskörper 20 weist zweite Zähne 22 auf, die entlang des Außenumfangs des Kupplungskörpers angeordnet sind. Weiter ist der Kupplungskörper 20 koaxial zur ersten Welle 12 ausgerichtet.

Es ist aber auch denkbar, dass der Kupplungskörper 20 einen Teil der zweiten Welle 14 bildet und mit dieser einstückig ausgebildet ist.

Die ersten und zweiten Zähne 18, 22 der Schaltmuffe 16 und des Kupplungskörpers 20 sind dabei an den Enden der Wellen 12, 14 positioniert.

Die ersten und zweiten Zähne 18, 22 dienen dazu, im Einkupplungszustand der Schaltmuffe 16 einen Formschluss in Form einer Kupplungsverzahnung 24 zwischen der Schaltmuffe 16 und dem Kupplungskörper 20 zu bilden.

Dabei ist es denkbar, dass die aus den ersten und zweiten Zähnen 18, 22 gebildete Kupplungsverzahnung 24 zumindest an den ersten Zähnen 18 und/oder den zweiten Zähnen 22 Hinterschnitte aufweist, die derart ausgebildet sind, dass bei einer Schaltmuffe im Einkupplungszustand und bei einer Drehmomentbeaufschlagung der Kupplung ein zusätzliches Verschieben der Schaltmuffe 16 hin zum Kupplungskörper 20 stattfindet. Dies kann durch sich keilförmig aufweitende Hinterschnitte erreicht werden, so dass eine Keilwirkung in Richtung vollständigem Einkupplungszustand entsteht, wenn ein Drehmoment übertragen wird.

Darüber hinaus ist ein Stator 26 vorgesehen, der ein Außengehäuse 28 umfasst und eine Spule 30, die zumindest teilweise im Außengehäuse 28 aufgenommen ist.

Das Außengehäuse 28 unterteilt sich in einen Gehäusetopf 32, der sich entlang des Umfangs der Spule 30 sowie entlang einer Stirnseite der Spule 30 erstreckt.

Weiter weist das Außengehäuse 28 einen Gehäusering 34 auf, der entlang des Umfangs der Spule 30 verläuft und sich zusätzlich auf der dem Gehäusetopf 32 entgegengesetzten Stirnseite der Spule 30 erstreckt.

Darüber hinaus ist ein gehäuseseitiger Anschlagring 36 vorgesehen, der im Bereich des Innenumfangs der Spule 30 angeordnet ist. Alternativ ist es auch denkbar, dass der Gehäusetopf 32 und/oder der Gehäusering 34 den Anschlagring 36 umfassen.

Die Spule 30 dient zur Verstellung eines Ankerrings 38 linear entlang der ersten Welle in Richtung des Einkupplungszustands der Schaltmuffe 16 hin zum Kupplungskörper 20.

Alternativ ist es auch denkbar, dass die Spule 30 zu einer Verstellung des Ankerrings 38 entlang der ersten Welle 12 hin zum Auskupplungszustand der Schaltmuffe 16 dient.

Dabei wird die Bewegung des Ankerrings 38 linear entlang der ersten Welle 12 hin zum Einkupplungszustand der Schaltmuffe 16 durch einen am Anschlagring 36 vorgesehenen Anschlag 40 begrenzt.

Der Ankerring 38 erstreckt sich entlang des Außenumfangs der Schaltmuffe 16. Er hat ein L-förmiges, umlaufendes Profil mit einem radial von einem Kreiszylinderabschnitt 42 nach innen vorstehenden Flansch 44.

Der Ankerring 38 und die Schaltmuffe 16 sind miteinander in Axialrichtung gekoppelt. Eine Verstellung durch die Spule 30, welche bei Bestromung eine magnetische Kraft auf den Ankerring 38 ausübt, geht auch mit einer Verstellung der Schaltmuffe 16 einher.

Der Ankerring 38 weist hierfür eine erste axiale Anlagefläche 46 auf, die auf der der Schaltmuffe 16 zugewandten Seite des radial nach innen hervorstehenden Flansches 44 vorgesehen ist.

Weiter weist die Schaltmuffe 16 eine zweite axiale Anlagefläche 48 auf, die stirnseitig auf der dem Kupplungskörper 20 abgewandten Seite der Schaltmuffe 16 vorgesehen ist und die der ersten axialen Anlagefläche 46 gegenüberliegt. Die erste und zweite axiale Anlagefläche 46, 48 stehen entsprechend Figur 1 bereits im Auskupplungszustand in Kontakt.

Dies kann auch dann der Fall sein, wenn die Schaltmuffe 16 im Einkupplungszustand ist.

Hierbei ist es möglich, dass es zu einer Relativbewegung zwischen der Schaltmuffe 16 und dem Ankerring 38 kommt, sodass Reibung zwischen der ersten und der zweiten axialen Anlagefläche 46, 48 entsteht, die unter Umständen zu Verschleiß führt.

Um die Reibung zu verringern und einen Verschleiß der Anlageflächen 46, 48 zu unterbinden, können die erste axiale Anlagefläche 46 und/oder die zweite axiale Anlagefläche 48 mit einer Gleitschicht beschichtet und/oder gehärtet sein.

Darüber hinaus ist der Ankerring 38 separat von der ersten Welle 12 der Schaltmuffe 16 und dem Kupplungskörper 20 in einer Axialführung 52 radial gelagert.

Bei dieser mehrteiligen Variante ist der Ankerring 38 auch separat von der Schaltmuffe 16 in der Axialführung 52 radial gelagert.

Hierdurch kann ein definierter radialer Luftspalt zwischen dem Ankerring 38 und dem Außengehäuse 28 der Spule 30 erzeugt werden.

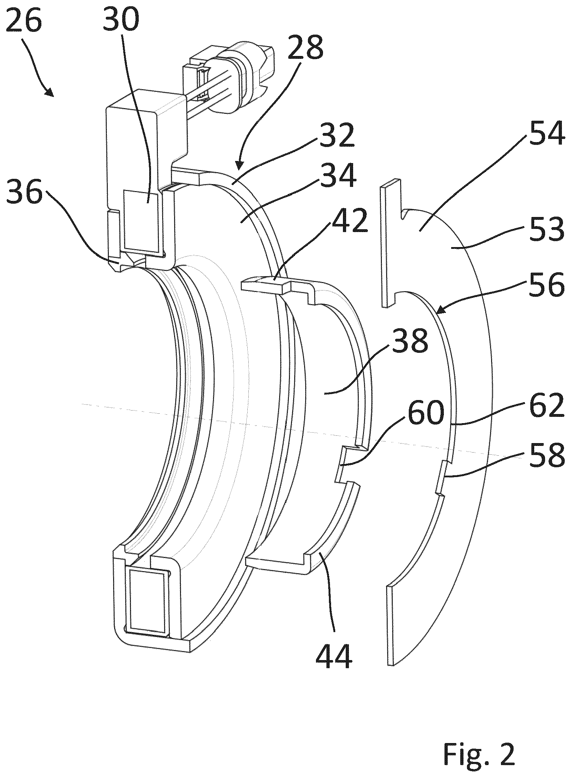

Die Axialführung 52 umfasst dabei ein als Scheibe 53 ausgebildetes Führungselement 54 mit einer Führungsgeometrie 56 (siehe Figur 2). Das Führungselement 54 ist mit dem Gehäusetopf 32 des Außengehäuses 28 und mit dem Ankerring 38 drehfest gekoppelt und übernimmt die Axialführung des Ankerrings entlang der Achse der ersten Welle 12.

Die Führungsgeometrie 56 des Führungselements 54 weist zur Führung des Ankerrings 38 einen Führungssteg 58 auf, der in eine Führungsnut 60 des Ankerrings 38 ragt und ein Verdrehen des Ankerrings 38 relativ zum Stator 26 verhindert.

Weiter umfasst die Führungsgeometrie 56 eine radiale Führungsfläche 62, die entlang des Innenumfangs des Führungselements 54 vorgesehen ist und durch die der Ankerring 38 entlang der außenseitigen Mantelfläche des Kreiszylinderabschnitts 42 bei einer Verstellung entlang der ersten Welle 12 konzentrisch zum Stator 26 geführt wird.

Alternativ kann das zusätzliche Führungselement 54 auch entfallen und die Führungsgeometrie 56 am Außengehäuse 28 vorgesehen sein.

Darüber hinaus ist eine elastische Federeinheit 64 vorgesehen, über die die Schaltmuffe 16 in axialer Richtung verschiebbar mit der ersten Welle 12 gekoppelt ist.

Die elastische Federeinheit 64 ist dabei derart zwischen der Schaltmuffe 16 und der ersten Welle 12 angeordnet, dass eine Relativverschiebung der Schaltmuffe 16 in axialer Richtung hin zum Einkupplungszustand ein Einfedern der elastischen Federeinheit 64 zur Folge hat.

Hierdurch entsteht eine Rückstellkraft, die die erste elastische Federeinheit 64 auf die Schaltmuffe 16 ausübt.

Die Rückstellkraft wirkt entgegengesetzt der magnetischen Kraft der Spule 30.

Die elastische Federeinheit 64 ist innerhalb der Schaltmuffe 16 angeordnet, wobei sich die Federeinheit 64 in axialer Richtung direkt oder indirekt an der Schaltmuffe 16 und an der ersten Welle 12 abstützt.

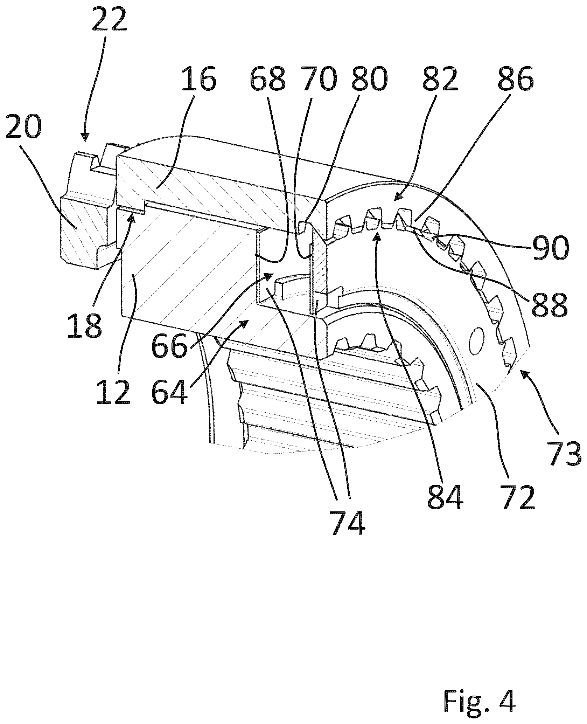

Hierbei ist die elastische Federeinheit 64 in einem Raum 66 (siehe Figur 4) untergebracht, der radial innenseitig durch die erste Welle 12 begrenzt ist. Radial außenseitig ist der Raum 66 durch die Schaltmuffe 16 begrenzt.

In axialer Richtung ist der Raum 66 durch eine erste axiale Fläche 68 begrenzt, die stirnseitig an der ersten Welle 12 vorgesehen ist und durch eine zweite axiale Fläche 70, die auf einem der Schaltmuffe 16 zugeordneten Bajonettring 72 vorgesehen ist, der über eine Bajonettverbindung 73 mit der Schaltmuffe 16 gekoppelt ist.

Die innerhalb des Raums 66 vorgesehene elastische Federeinheit 64 umfasst zumindest eine innerhalb des Raums 66 angeordneten Wellenfeder 74. Alternativ kann die Federeinheit 64 auch ein Paket aus mehreren Wellenfedern 74 umfassen.

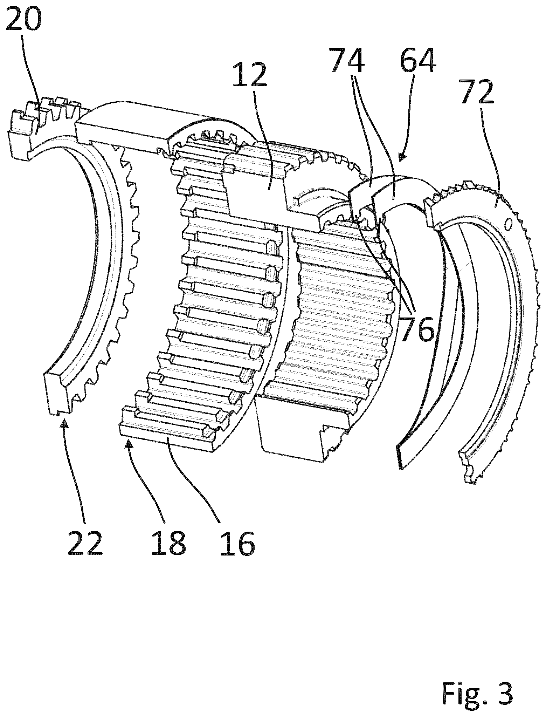

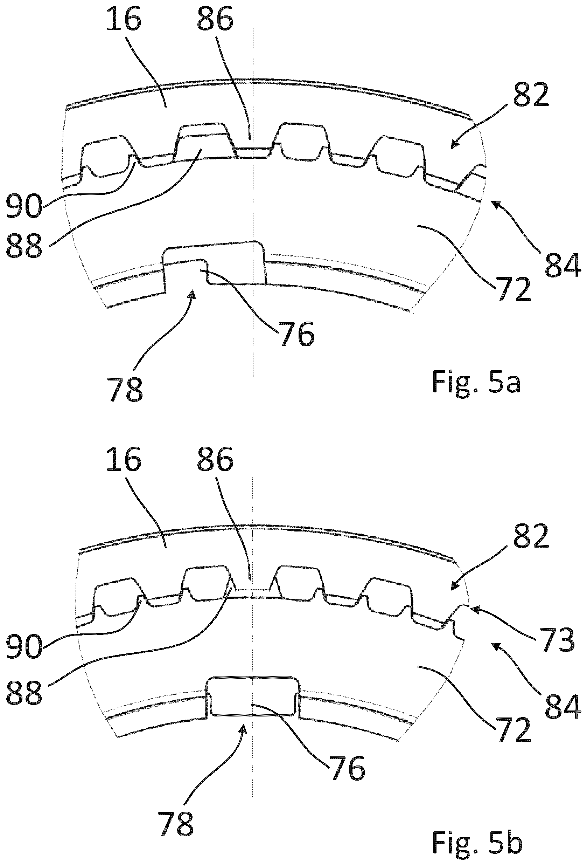

Entsprechend den Figuren 1 bis 4 weist die elektromagnetische Kupplung zwei Wellenfeder 74 auf, die jeweils mit Nasen 76 versehen sind (siehe insbesondere Figur 3). Die Nasen 76 der Wellenfeder 74 greifen dabei in Aussparungen 78 ein, die an der ersten Welle 12 vorgesehen sind, sodass sich die zwei Wellenfedern 74 nicht relativ zueinander verdrehen können (siehe insbesondere Figur 5b).

Im Nachfolgenden soll insbesondere anhand der Figuren 3 bis 5b genauer auf die Bajonettverbindung 73 eingegangen werden, die zwischen dem Bajonettring 72 und der Schaltmuffe 16 vorliegt.

Die Bajonettverbindung 73 wird einerseits mithilfe einer umlaufende Nut 80 und durch eine erste Verzahnung 82 gebildet, die auf der Innenseite der Schaltmuffe 16 zur ersten Welle 12 vorgesehen sind. Andererseits wird sie durch eine zweite, an dem Bajonettring 72 vorgesehene Verzahnung 84 gebildet.

Sollen die Schaltmuffe 16 und der Bajonettring 72 über die Bajonettverbindung 73 miteinander verbunden werden, so müssen die erste und zweite Verzahnung 82, 84 der Schaltmuffe 16 und des Bajonettrings 72 entsprechend Figur 5a zueinander ausgerichtet werden, wobei der Bajonettring 72 hierbei zunächst noch nicht innerhalb der Schaltmuffe 16 angeordnet ist.

Ist eine Ausrichtung der Teile entsprechend Figur 5a erfolgt, so kann der Bajonettring 72 entlang der Achse der ersten Welle 12 hin zur Schaltmuffe 16 verschoben werden (in Figur 5a also in die Ebene hinein), sodass dieser in der Schaltmuffe 16 aufgenommen ist.

Hierbei kommt es unter Umständen zu einer Vorspannung der elastischen Federeinheit 64.

Wird der Bajonettring 72 axial soweit eingeschoben, dass er von der umlaufenden Nut 80 der Schaltmuffe 16 umgeben ist, so kann der Bajonettring 72 innerhalb der umlaufenden Nut 80 relativ zur Schaltmuffe 16 verdreht werden. Erfolgt dabei eine Verdrehung des Bajonettrings 72 entsprechend Figur 5b, so kommt es zu einer zumindest teilweisen Überdeckung der ersten und zweiten Verzahnung 82, 84.

Wird nun keinerlei äußere Kraft auf den Bajonettring 72 aufgebracht, so wird dieser von der vorgespannten Federeinheit 64 aus der umlaufenden Nut 80 gedrückt, wobei dessen axiale Bewegung aus der Schaltmuffe 16 heraus durch die Überdeckung der ersten und zweiten Verzahnung 82, 84 verhindert wird.

In diesem Zustand ist der Bajonettring 72 in axialer Richtung durch die Überdeckung von ersten abgeschrägten Zähnen 86 der ersten Verzahnung 82 sowie zweiten abgeschrägten Zähnen 88 der zweiten Verzahnung 84 arretiert.

Weiter hat der Bajonettring 72 dritte Zähne 90, die einen Formschluss in Umfangsrichtung mit den Zahnflanken der ersten abgeschrägten Zähne 86 eingehen (siehe insbesondere Figur 4 und 5b) und somit zwischen diesen liegen

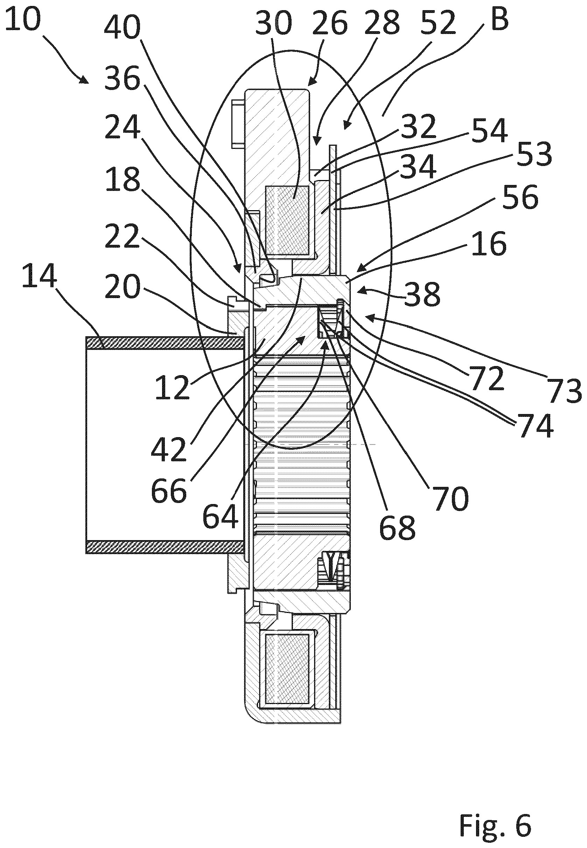

In Figur 6 ist eine elektromagnetische Kupplung gemäß einer zweiten Option gezeigt.

Im Unterschied zur ersten Option bildet die Schaltmuffe 16 bei der zweiten Version auch gleichzeitig den Ankerring 38, sodass der Ankerring 38 ein Teil der Schaltmuffe 16 ist und kein zusätzliches Bauteil. Dementsprechend erfolgt eine Verstellung der Schaltmuffe 16 direkt durch ein Aufbringen einer magnetischen Kraft über die Spule 30 auf die Schaltmuffe 16 selbst.

Bei der zweiten Option wird bei den Führungselementen 54 der Axialführung 52 vorzugsweise auf die Führungsstege 58 verzichtet. Dies ist notwendig, da die Axialführung 52 am Stator 26 befestigt ist und die Schaltmuffe 16 sich im Einkupplungszustand relativ zu dieser bewegt.

Weiter ist es auch denkbar, dass bei der als Ankerring ausgeführten Schaltmuffe 16 bei der zweiten Option bei Erreichen des Einkupplungszustands keine axiale Überdeckung mehr zum Führungselement 54 der Axialführung 52 vorliegt.

Abgesehen davon sind die obigen Erläuterungen zur ersten Option analog auf die zweite Option anwendbar.

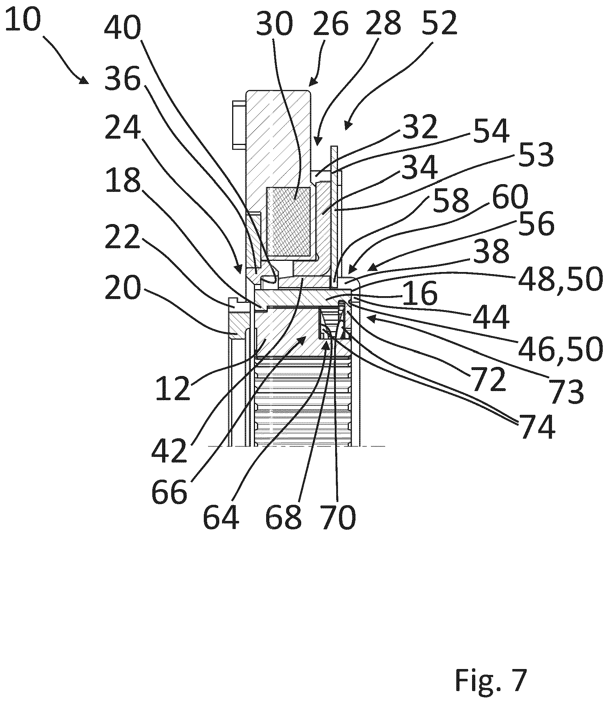

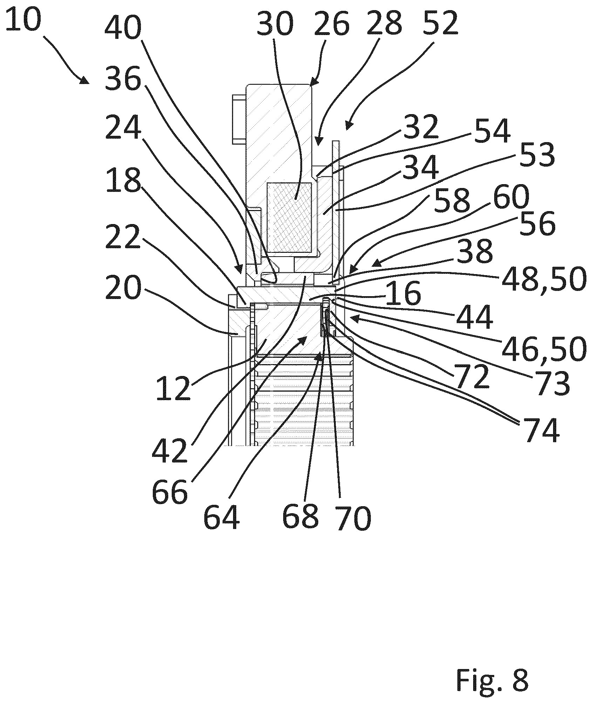

Nachfolgend soll anhand der Figuren 7 und 8 die Funktionsweise und der Betrieb der elektromagnetischen Kupplung 10 gemäß der ersten Option erläutert werden.

Den Ausgangszustand bildet hierbei der Auskupplungszustand der Schaltmuffe 16, wie in den Figuren 1 und 7 gezeigt.

Es liegt also kein Formschluss zwischen den ersten und zweiten Zähnen 18, 22 der Schaltmuffe 16 und des Kupplungskörpers 20 vor.

Die Schaltmuffe 16 wird in diesem ausgekoppelten und geöffneten Zustand durch die elastische Federeinheit 64 gehalten, solange keinerlei äußere Kräfte auf die Schaltmuffe 16 wirken, deren Betrag die Federkraft der Federeinheit 64 übersteigt.

Indirekt wird somit auch die Bewegung des Ankerrings 38 in Richtung des Kupplungskörpers 20 verhindert, da dieser über die auf dem Flansch 44 vorgesehene erste axiale Anlagefläche 46 und die zweite axiale Anlagefläche 48 mit der im Auskupplungszustand fixierte Schaltmuffe 16 in Kontakt steht.

Somit hindert die Federeinheit 64 den Ankerring 38 in axialer Richtung an einer Bewegung hin zum Kupplungskörper 20, solange keine zusätzliche Kraft auf diese wirkt.

Soll die Schaltmuffe 16 aus dem Auskupplungszustand hin zum Kupplungskörper 20 verschoben werden, so muss zuerst eine Spannung an die Spule 30 angelegt werden.

Das Spannungsanlegen an die Spule 30 sorgt für einen magnetischen Fluss, durch den eine magnetische Kraft auf den Ankerring 38 in Richtung des Kupplungskörpers 20 wirkt.

Übersteigt der Betrag der magnetischen Kraft den Betrag der Federkraft, die durch die Federeinheit 64 auf die Schaltmuffe wirkt und damit über die in Kontakt stehenden axialen Anlageflächen 46, 48 auch auf den Ankerring 38 wirkt, so kommt es zu einer Bewegung des Ankerrings 38 hin zum Kupplungskörper 20, wobei der Ankerring 38 über den Flansch 44 und die in Kontakt stehenden Anlageflächen 46, 48 auch die Schaltmuffe 16 mit zum Kupplungskörper 20 in Richtung Einkupplungszustand verschiebt.

Diese Verschiebung des Ankerrings 38 und der über den Ankerring 38 mitgenommenen Schaltmuffe 16 erfolgt solange, bis der Ankerring 38 den auf dem Außengehäuse 28 vorgesehenen Anschlag 40 erreicht. Damit befindet sich die Schaltmuffe 16 im Einkupplungszustand. Bei bestromter Spule 30 wirkt dabei eine magnetische Haltekraft auf den Ankerring 38 (siehe Figur 8).

Im Einkupplungszustand greifen die ersten und zweiten Zähne 18, 22 ineinander, sodass ein Formschluss zwischen der Schaltmuffe 16 und dem Kupplungskörper 20 vorliegt.

Dabei kann es dazu kommen, dass sobald die ersten und zweiten Zähne 18, 22 ineinandergreifen, eine rotatorische Relativbewegung zwischen der Schaltmuffe 16 und dem Ankerring 38, der aufgrund des Führungselements 54 verdrehfest am Stator 26 angeordnet ist, vorliegt.

Bei in Kontakt stehender erster axialer Anlagefläche 46 und zweiter axialer Anlagefläche 48 kann es dabei zu Reibung zwischen dem Ankerring 38 und der Schaltmuffe 16 kommen. Entsprechend den obigen Erläuterungen kann diese jedoch aufgrund der Gleitschicht 50 verringert werden. Zudem können die Anlageflächen 46, 48 gehärtet sein. Beides soll dazu beitragen, Verschleißerscheinungen zu verringern.

Die Verschiebung hat zur Folge, dass die Abmessungen des Raums 66 in axialer Richtung abnehmen, wobei hierdurch die elastische Federeinheit 64 komprimiert wird und eine Rückstellkraft entgegen der magnetischen Kraft hin zum Auskupplungszustand auf die Schaltmuffe 16 ausübt.

Entsprechend den obigen Erläuterungen ist es denkbar, dass die ersten und/oder zweiten Zähne 18, 22 mit seitlichen Hinterschnitten in axialer Richtung und in Richtung Einkupplungszustand versehen sind.

Weisen die ersten und/oder zweiten Zähne 18, 22 Hinterschnitte auf, so hat eine Drehmomentübertragung zwischen dem Kupplungskörper 20 und der ersten Welle 12 zur Folge, dass aufgrund der Hinterschnitte und der dadurch entstehenden Keilwirkung zwischen den kontaktierenden Zähnen eine Kraft auf die Schaltmuffe 16 in Richtung des Einkupplungszustands, also hin zum Kupplungskörper 20, entsteht.

Die auf die Schaltmuffe 16 wirkende Kraft ist dabei maßgeblich abhängig von der Geometrie der Hinterschnitte der Zähne 18, 22 und dem vorliegenden Drehmoment. Dies hat zur Folge, dass die Schaltmuffe 16 dadurch relativ zu dem Ankerring 38 hin zum Kupplungskörper 20 bewegt wird, sodass sich die axiale Überdeckung der ersten und zweiten Zähne 18, 22 erhöht.

Infolge der relativen Verschiebung liegt keinerlei Kontakt zwischen dem Ankerring und der Schaltmuffe an der ersten und zweiten axialen Anlagefläche 46, 48 vor, sodass auch aufgrund der rotatorischen Relativbewegung zwischen den Bauteilen keine Reibung an den Anlageflächen 46, 48 entstehen kann.

Soll die Schaltmuffe 16 nun zurück in den Auskupplungszustand verschoben werden, so muss zunächst die magnetische Kraft, welche durch an die Spule 30 angelegte Spannung erzeugt wird, reduziert oder aufgehoben werden.

Ist der Betrag der magnetischen Kraft, der auf den Ankerring 38 wirkt, unterhalb des Betrags der Rückstellkraft durch die elastische Federeinheit 64, die auf die Schaltmuffe 16 beziehungsweise auf den mit der Schaltmuffe 16 gekoppelten Bajonettring 72 wirkt, so hat dies eine Verschiebung der Schaltmuffe 16 mitsamt dem Ankerring 38 aus dem Einkupplungszustand zurück in den Auskupplungszustand entsprechend Figur 7 zur Folge.

In diesem Zustand wird die Schaltmuffe 16 wiederum entsprechend den obigen Erläuterungen durch die Federkraft der elastischen Federeinheit 74 gehalten.

Während der gesamten Verschiebung des Ankerrings 38 entlang der ersten Welle 12 wird dieser durch die Axialführung 52 und deren Führungselement 54 geführt. In axialer Richtung erfolgt die Führung dabei entsprechend den obigen Erläuterungen entlang des Mantels des Kreiszylinderabschnitts 42 des Ankerrings 38 mittels der radialen Führungsfläche 62.

Gleichzeitig wird der Ankerring 38 gegen ein Verdrehen gesichert, indem die Führungsstege 58 der Führungsgeometrie 56 in die Führungsnuten 60 des Ankerrings 38 eingreifen.

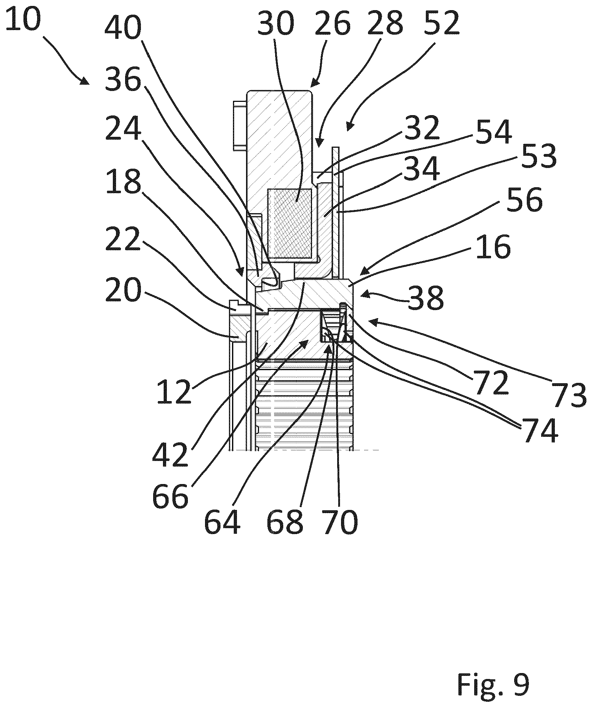

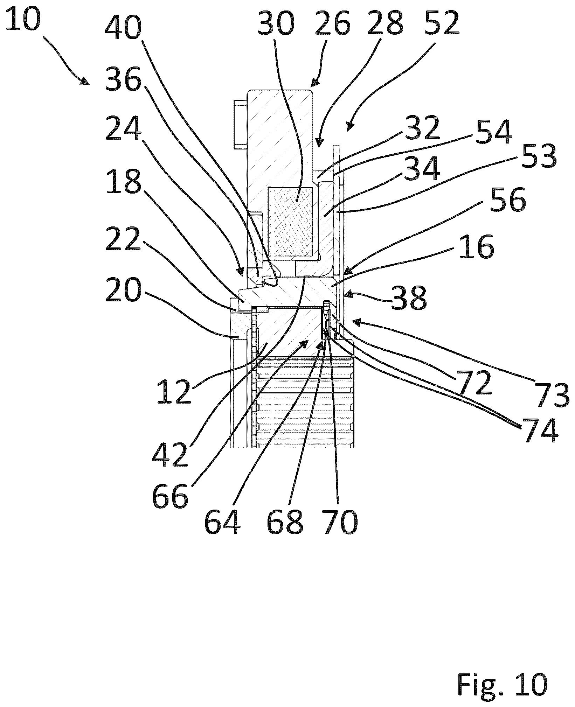

Darüber hinaus soll nun nachfolgend anhand der Figuren 9 und 10 die Funktionsweise und der Betrieb der elektromagnetischen Kupplung 10 gemäß der zweiten Option erläutert werden, wobei generell die vorherigen Ausführungen zur Option 1 auch für die elektromagnetische Kupplung 10 gemäß Option 2 gelten.

Figur 9 zeigt die als Ankerring ausgeführte Schaltmuffe 16 in der Auskupplungsposition. Im Unterschied zur Option 1 wird bei der elektromagnetischen Kupplung gemäß Option 2 die magnetische Kraft zur Verstellung der Schaltmuffe 16 von der Spule 30 direkt auf die Schaltmuffe 16 aufgebracht, da diese selbst als Ankerring fungiert.

Entsprechend den obigen Erläuterungen wird die als Ankerring ausgeführte Schaltmuffe 16 dabei mittels der Führungsgeometrie 56 der Axialführung 52 entlang der ersten Welle 12 geführt, sodass sich ein definierter radialer Spalt zwischen der Schaltmuffe 16 und dem Außengehäuse 28 des Stators 26 ausbildet.

In Figur 10 ist die Schaltmuffe 16 im Einkupplungszustand gezeigt, wobei sich die Schaltmuffe 16 in diesem Zustand nicht mehr von der Axialführung 52 geführt wird, um Reibung zwischen dem Führungselement 54 der Axialführung 52 und der sich relativ dazu bewegenden Schaltmuffe zu unterbinden.

Die Haltekraft, welche von der bestromten Spule 30 über den Anschlag 40 aufgebracht wird, wirkt direkt auf die Schaltmuffe 16 und hält diese im Einkupplungszustand, solange die magnetische Kraft den Betrag der Rückstellkraft durch die elastische Federeinheit 64 übertrifft.

Ist dies nicht mehr der Fall, so bewegt sich die Schaltmuffe 16 zurück, wobei sie hierbei wieder mit der Axialführung 52 in Kontakt kommt und dementsprechend definiert entlang der ersten Welle bewegt wird. Dies erfolgt, bis die Schaltmuffe entsprechend Figur 9 wieder den Auskupplungszustand erreicht hat.

## Patentansprüche

1. Elektromagnetische Kupplung mit
einer Schaltmuffe (16), die drehfest auf einer ersten Welle (12) angeordnet ist und linear entlang der ersten Welle (12) zwischen einem Ein- und Auskupplungszustand verstellbar ist,
einem Kupplungskörper (20), der koaxial zur ersten Welle (12) ausgerichtet ist,
wobei im Einkupplungszustand ein Formschluss zwischen der Schaltmuffe (16) und dem Kupplungskörper (20) und damit eine Drehverbindung zwischen der ersten Welle (12) und dem Kupplungskörper (20) vorliegt, und
einem Stator (26), der eine Spule (30) umfasst, die zur Verstellung eines Ankerrings (38) linear entlang der ersten Welle (12) dient, wobei der Ankerring (38) separat von der ersten Welle (12) und dem Kupplungskörper (20) in einer Axialführung (52) radial gelagert ist,
wobei mit einer Verstellung des Ankerrings (38) mittels der Spule (30) auch eine Verstellung der Schaltmuffe (16) einhergeht, **dadurch gekennzeichnet,**
**dass** der Formschluss zwischen der Schaltmuffe (16) und dem Kupplungskörper (20) im Einkupplungszustand durch eine Kupplungsverzahnung (24) mit Hinterschnitten erfolgt und die Hinterschnitte derart ausgebildet sind, dass eine Drehmomentbeaufschlagung der Kupplung ein zusätzliches Verschieben der Schaltmuffe (16) hin zum Kupplungskörper (20) zur Folge hat.

2. Elektromagnetische Kupplung nach Anspruch 1, **dadurch gekennzeichnet, dass** der Ankerring (38) und die Schaltmuffe (16) verschiedene, miteinander in Axialrichtung koppelbare Teile sind und der Ankerring (38) eine erste axiale Anlagefläche (46) aufweist, die zumindest bei einer Verstellung des Ankerrings (38) mittels der Spule (30) mit einer zweiten an der Schaltmuffe (16) vorgesehenen axialen Anlagefläche (48) in Kontakt ist.

3. Elektromagnetische Kupplung nach Anspruch 2, **dadurch gekennzeichnet, dass** der Ankerring (38) separat von der Schaltmuffe (16) in der Axialführung (52) radial gelagert ist, insbesondere dass die erste und/oder die zweite axiale Anlagefläche (48) mit einer Gleitschicht (50) beschichtet und/oder gehärtet sind.

4. Elektromagnetische Kupplung nach Anspruch 1, **dadurch gekennzeichnet, dass** die Schaltmuffe (16) auch den Ankerring (38) bildet.

5. Elektromagnetische Kupplung nach einem der vorherigen Ansprüche, **dadurch gekennzeichnet, dass** eine Verstellung des Ankerrings (38) durch die Spule (30) durch einen Anschlag (40) begrenzt ist und dass bei einer Kontaktierung zwischen dem Ankerring (38) und dem Anschlag (40) bei bestromter Spule (30) eine magnetische Haltekraft vorliegt, die auf den Ankerring (38) wirkt.

6. Elektromagnetische Kupplung nach einem der vorherigen Ansprüche, **dadurch gekennzeichnet, dass** der Stator (26) zumindest ein Außengehäuse (28) umfasst, das teilweise entlang der Spule (30) verläuft, und dass eine Führungsgeometrie (56) zwischen dem Außengehäuse (28) und dem Ankerring (38) und/oder zwischen einem zusätzlichen Führungselement (54) und dem Ankerring (38) ausgebildet ist, die die Axialführung (52) des Ankerrings (38) entlang der Achse der ersten Welle (12) übernimmt.

7. Elektromagnetische Kupplung nach Anspruch 6, **dadurch gekennzeichnet, dass** die Führungsgeometrie (56) zumindest einen Führungssteg (58) aufweist, der in eine Führungsnut (60) ragt und ein Verdrehen des Ankerrings (38) relativ zum Stator (26) verhindert, sowie eine radiale Führungsfläche, die den Ankerring (38) konzentrisch zum Stator (26) führt.

8. Elektromagnetische Kupplung nach einem der vorherigen Ansprüche, **dadurch gekennzeichnet, dass** die bestromte Spule (30) eine magnetische Kraft auf den Ankerring (38) ausübt, die über den Ankerring (38) auf die Schaltmuffe (16) hin zum Auskupplungszustand oder hin zum Einkupplungszustand wirkt und, dass eine elastische Federeinheit (64) vorgesehen ist, die eine Rückstellkraft auf die Schaltmuffe (16) ausübt, welche in eine der magnetischen Kraft entgegengesetzte Richtung wirkt.

9. Elektromagnetische Kupplung nach Anspruch 8, **dadurch gekennzeichnet, dass** die Rückstellkraft, die die elastische Federeinheit auf die Schaltmuffe (16) ausübt, auch auf den Ankerring (38) wirkt.

10. Elektromagnetische Kupplung nach Anspruch 8 oder 9, **dadurch gekennzeichnet, dass** die elastische Federeinheit (64) innerhalb der Schaltmuffe (16) angeordnet ist und sich in axialer Richtung direkt oder indirekt an der Schaltmuffe (16) und an der ersten Welle (12) abstützt.

11. Elektromagnetische Kupplung nach einem der Ansprüche 8 bis 10, **dadurch gekennzeichnet, dass** innerhalb der Schaltmuffe (16) ein Stützring angeordnet ist, an dem sich die elastische Federeinheit (64) in axialer Richtung abstützt.

12. Elektromagnetische Kupplung nach einem der Ansprüche 8 bis 11, **dadurch gekennzeichnet, dass** der Stützring in Form eines Bajonettrings (72) ausgebildet ist, der eine Bajonettverbindung (73) mit der Schaltmuffe (16) eingehen kann, und an dem sich die elastische Federeinheit (64) in axialer Richtung abstützt, insbesondere dass die Bajonettverbindung (73) einerseits durch eine umlaufende Nut und eine erste Verzahnung (82), die jeweils auf der Innenseite der Schaltmuffe (16) hin zur ersten Welle (12) vorgesehen sind, gebildet wird und anderseits durch eine zweite an dem Bajonettring (72) vorgesehene Verzahnung (84).

13. Elektromagnetische Kupplung nach einem der Ansprüche 8 bis 12, **dadurch gekennzeichnet, dass** die elastische Federeinheit (64) zumindest eine Wellenfeder (74) umfasst, insbesondere dass zumindest zwei Wellenfedern (74) vorgesehen sind, die jeweils Nasen (76) aufweisen, die in eine Aussparung (78) eingreifen, sodass sich die zumindest zwei Wellenfedern (74) nicht relativ zueinander verdrehen können.

14. Verfahren zum Schließen und Öffnen einer elektromagnetischen Kupplung (10) nach einem der vorherigen Ansprüche, mit den folgenden Schritten:
a) Spannungsanlegen an die Spule (30) und Erzeugen einer auf den Ankerring (38) wirkenden magnetischen Kraft in eine erste Richtung;
b) dadurch Verschieben der Schaltmuffe (16) aus der Ausgangsposition und hin zum Ein- oder Auskupplungszustand;
c) Aufheben oder Verringern der auf den Ankerring (38) wirkenden magnetischen Kraft; und
d) Verschieben der Schaltmuffe (16) entgegen der Richtung der magnetischen Kraft durch eine Rückstellkraft, die die elastische Federeinheit (64) auf die Schaltmuffe (16) ausübt.

## Claims

1. An electromagnetic clutch, comprising
a selector sleeve (16) which is arranged in a rotationally fixed manner on a first shaft (12) and is adapted to be shifted linearly along the first shaft (12) between an engaged and a disengaged state,
a coupling body (20) which is aligned coaxially with the first shaft (12),
wherein in the engaged state, there is a positive fit between the selector sleeve (16) and the coupling body (20) and thus a rotary connection between the first shaft (12) and the coupling body (20), and
a stator (26) which has a coil (30) which serves to shift an armature ring (38) linearly along the first shaft (12), the armature ring (38) being mounted radially in an axial guide (52) separately from the first shaft (12) and the coupling body (20),
wherein a shifting of the armature ring (38) by means of the coil (30) is also accompanied by a shifting of the selector sleeve (16), **characterized in that**
the positive fit between the selector sleeve (16) and the coupling body (20) in the engaged state is realized by a coupling toothing (24) having undercuts, and the undercuts are formed such that an application of torque to the clutch results in an additional shifting of the selector sleeve (16) towards the coupling body (20).

2. The electromagnetic clutch according to claim 1, **characterized in that** the armature ring (38) and the selector sleeve (16) are different parts which are adapted to be coupled to each other in the axial direction, and the armature ring (38) has a first axial resting surface (46) which is in contact with a second axial resting surface (48) provided on the selector sleeve (16), at least when the armature ring (38) is shifted by means of the coil (30).

3. The electromagnetic clutch according to claim 2, **characterized in that** the armature ring (38) is mounted radially in the axial guide (52) separately from the selector sleeve (16), in particular **in that** the first and/or the second axial resting surface (48) are/is coated with a lubricant layer (50) and/or hardened.

4. The electromagnetic clutch according to claim 1, **characterized in that** the selector sleeve (16) also forms the armature ring (38).

5. The electromagnetic clutch according to any of the preceding claims, **characterized in that** a shifting of the armature ring (38) by the coil (30) is limited by a stop (40), and **in that** in the event of a contacting between the armature ring (38) and the stop (40) when the coil (30) is energized, a magnetic holding force is present which acts on the armature ring (38).

6. The electromagnetic clutch according to any of the preceding claims, **characterized in that** the stator (26) comprises at least an outer housing (28) which extends partially along the coil (30), and **in that** a guiding geometry (56) is formed between the outer housing (28) and the armature ring (38) and/or between an additional guiding element (54) and the armature ring (38), which takes over the axial guidance (52) of the armature ring (38) along the axis of the first shaft (12).

7. The electromagnetic clutch according to claim 6, **characterized in that** the guiding geometry (56) has at least one guiding web (58) which projects into a guiding groove (60) and prevents the armature ring (38) from rotating relative to the stator (26), and a radial guiding surface which guides the armature ring (38) concentrically to the stator (26).

8. The electromagnetic clutch according to any of the preceding claims, **characterized in that** the energized coil (30) exerts a magnetic force on the armature ring (38) which acts via the armature ring (38) on the selector sleeve (16) towards the disengaged state or towards the engaged state, and **in that** an elastic spring unit (64) is provided which exerts a restoring force on the selector sleeve (16) which acts in a direction opposite to the magnetic force.

9. The electromagnetic clutch according to claim 8, **characterized in that** the restoring force exerted on the selector sleeve (16) by the elastic spring unit also acts on the armature ring (38).

10. The electromagnetic clutch according to claim 8 or 9, **characterized in that** the elastic spring unit (64) is arranged inside the selector sleeve (16) and is supported in the axial direction directly or indirectly on the selector sleeve (16) and on the first shaft (12).

11. The electromagnetic clutch according to any of claims 8 to 10, **characterized in that** a supporting ring is arranged inside the selector sleeve (16), on which the elastic spring unit (64) is supported in the axial direction.

12. The electromagnetic clutch according to any of claims 8 to 11, **characterized in that** the supporting ring is configured in the form of a bayonet ring (72) which is adapted to establish a bayonet connection (73) with the selector sleeve (16) and on which the elastic spring unit (64) is supported in the axial direction, in particular **in that** the bayonet connection (73) is formed, on the one hand, by a circumferential groove and a first toothing (82) each provided on the interior side of the selector sleeve (16) towards the first shaft (12), and, on the other hand, by a second toothing (84) provided on the bayonet ring (72).

13. The electromagnetic clutch according to any of claims 8 to 12, **characterized in that** the elastic spring unit (64) comprises at least one wave spring (74), in particular **in that** at least two wave springs (74) are provided each having lugs (76) which engage into a recess (78) such that the at least two wave springs (74) cannot rotate relative to each other.

14. A method of closing and opening an electromagnetic clutch (10) according to any of the preceding claims, comprising the following steps:
a) applying a voltage to the coil (30) and generating a magnetic force acting on the armature ring (38) in a first direction;
b) thereby shifting the selector sleeve (16) from the initial position and towards an engaged or disengaged state;
c) canceling or reducing the magnetic force acting on the armature ring (38); and
d) shifting the selector sleeve (16) in a direction opposite to the direction of the magnetic force by a restoring force exerted on the selector sleeve (16) by the elastic spring unit (64).

## Revendications

1. Embrayage électromagnétique comprenant
une douille de changement de vitesses (16) qui est montée solidaire en rotation sur un premier arbre (12) et qui est déplaçable linéairement le long du premier arbre (12) entre un état embrayé et un état de débrayé,
un corps d'embrayage (20) qui est aligné de manière coaxiale par rapport au premier arbre (12),
une liaison par coopération de formes étant réalisée entre la douille de changement de vitesses (16) et le corps d'embrayage (20) à l'état embrayé, et ainsi une liaison en rotation entre le premier arbre (12) et le corps d'embrayage (20), et
un stator (26) comprenant une bobine (30) qui sert à déplacer une bague d'induit (38) linéairement le long du premier arbre (12), la bague d'induit (38) étant montée radialement dans un guidage axial (52), séparément du premier arbre (12) et du corps d'embrayage (20),
un déplacement de la bague d'induit (38) au moyen de la bobine (30) s'accompagnant aussi d'un déplacement de la douille de changement de vitesses (16), **caractérisé en ce que**
la liaison par coopération de formes entre la douille de changement de vitesses (16) et le corps d'embrayage (20) à l'état embrayé est réalisée par une denture d'embrayage (24) présentant des contre-dépouilles, et les contre-dépouilles sont réalisées de telle sorte qu'une application de couple sur l'embrayage entraîne un déplacement supplémentaire de la douille de changement de vitesses (16) vers le corps d'embrayage (20).

2. Embrayage électromagnétique selon la revendication 1, **caractérisé en ce que** la bague d'induit (38) et la douille de changement de vitesses (16) sont des pièces distinctes aptes à être couplées les unes aux autres dans le sens axial, et la bague d'induit (38) présente une première surface d'appui axiale (46) qui, au moins lors d'un déplacement de la bague d'induit (38) au moyen de la bobine (30), est en contact avec une deuxième surface d'appui axiale (48) prévue sur la douille de changement de vitesses (16).

3. Embrayage électromagnétique selon la revendication 2, **caractérisé en ce que** la bague d'induit (38) est montée radialement dans le guidage axial (52), séparément de la douille de changement de vitesses (16), en particulier **en ce que** la première et/ou la deuxième surface d'appui axiale (48) sont/est revêtue(s) d'une couche lubrifiante (50) et/ou trempée(s).

4. Embrayage électromagnétique selon la revendication 1, **caractérisé en ce que** la douille de changement de vitesses (16) forme également la bague d'induit (38).

5. Embrayage électromagnétique selon l'une des revendications précédentes, **caractérisé en ce qu'**un déplacement de la bague d'induit (38) au moyen la bobine (30) est limité par une butée (40) et **en ce que**, lors d'un contact entre la bague d'induit (38) et la butée (40) lorsque la bobine (30) est alimentée, une force de retenue magnétique agit sur la bague d'induit (38).

6. Embrayage électromagnétique selon l'une des revendications précédentes, **caractérisé en ce que** le stator (26) comprend au moins un boîtier extérieur (28) qui s'étend partiellement le long de la bobine (30), et **en ce qu'**une géométrie de guidage (56) est réalisée entre le boîtier extérieur (28) et la bague d'induit (38) et/ou entre un élément de guidage supplémentaire (54) et la bague d'induit (38), laquelle assure le guidage axial (52) de la bague d'induit (38) le long de l'axe du premier arbre (12).

7. Embrayage électromagnétique selon la revendication 6, **caractérisé en ce que** la géométrie de guidage (56) présente au moins une nervure de guidage (58) qui fait saillie dans une rainure de guidage (60) et empêche une rotation de la bague d'induit (38) par rapport au stator (26), ainsi qu'une surface de guidage radiale qui guide la bague d'induit (38) de manière concentrique par rapport au stator (26).

8. Embrayage électromagnétique selon l'une des revendications précédentes, **caractérisé en ce que** la bobine alimentée (30) exerce une force magnétique sur la bague d'induit (38), qui agit via la bague d'induit (38) sur la douille de changement de vitesses (16) vers l'état débrayé ou vers l'état embrayé, et **en ce qu'**il est prévu une unité de ressort élastique (64) qui exerce une force de rappel sur la douille de changement de vitesses (16), laquelle agit dans un sens opposé à la force magnétique.

9. Embrayage électromagnétique selon la revendication 8, **caractérisé en ce que** la force de rappel que l'unité de ressort élastique exerce sur la douille de changement de vitesses (16) agit également sur la bague d'induit (38).

10. Embrayage électromagnétique selon la revendication 8 ou 9, **caractérisé en ce que** l'unité de ressort élastique (64) est agencée à l'intérieur de la douille de changement de vitesses (16) et prend appui dans le sens axial, directement ou indirectement, sur la douille de changement de vitesses (16) et sur le premier arbre (12).

11. Embrayage électromagnétique selon l'une des revendications 8 à 10, **caractérisé en ce qu'**une bague d'appui est agencée à l'intérieur de la douille de changement de vitesses (16), sur laquelle l'unité de ressort élastique (64) prend appui dans le sens axial.

12. Embrayage électromagnétique selon l'une des revendications 8 à 11, **caractérisé en ce que** la bague d'appui est réalisée sous forme de bague à baïonnette (72) qui est apte à former une liaison à baïonnette (73) avec la douille de changement de vitesses (16) et sur laquelle l'unité de ressort élastique (64) prend appui dans le sens axial, en particulier **en ce que** la liaison à baïonnette (73) est réalisée, d'une part, par une rainure périphérique et une première denture (82), qui sont respectivement prévues sur la face intérieure de la douille de changement de vitesses (16) en direction du premier arbre (12), et, d'autre part, par une deuxième denture (84) prévue sur la bague à baïonnette (72).

13. Embrayage électromagnétique selon l'une des revendications 8 à 12, **caractérisé en ce que** l'unité de ressort élastique (64) comprend au moins un ressort ondulé (74), en particulier **en ce qu'**il est prévu au moins deux ressorts ondulés (74) qui présentent chacun des nez (76) qui s'engagent dans un évidement (78), de sorte que lesdits au moins deux ressorts ondulés (74) ne peuvent pas tourner l'un par rapport à l'autre.

14. Procédé de fermeture et d'ouverture d'un embrayage électromagnétique (10) selon l'une des revendications précédentes, comprenant les étapes suivantes :
a) l'application d'une tension à la bobine (30) et la génération d'une force magnétique agissant sur la bague d'induit (38) dans un premier sens ;
b) ainsi le déplacement de la douille de changement de vitesses (16) de la position initiale vers l'état embrayé ou débrayé ;
c) la suppression ou la réduction de la force magnétique agissant sur la bague d'induit (38) ; et
d) le déplacement de la douille de changement de vitesses (16) dans le sens opposé au sens de la force magnétique par une force de rappel exercée par l'unité de ressort élastique (64) sur la douille de changement de vitesses (16).
